# EUROPEAN PATENT APPLICATION

(11) **EP 3 093 738 A1**
(43) Date of publication of application: **16.11.2016**
(21) Application number: 14878312.9
(22) Date of filing: 22.10.2014
(51) Int. Cl.: G06F 3/0346, G06F 3/01, G06F 3/038, G06F 3/0481

(54) **INFORMATION PROCESSING SYSTEM, INFORMATION PROCESSING METHOD, AND PROGRAM**

(30) Priority: 08.01.2014 JP 2014001763
(71) Applicant: Sony Corporation, Tokyo 108-0075 (JP)
(72) Inventor: YASUDA, Ryouhei, Tokyo 108-0075 (JP); NODA, Takuro, Tokyo 108-0075 (JP); YAMAMOTO, Kazuyuki, Tokyo 108-0075 (JP)
(74) Representative: MFG Patentanwälte Meyer-Wildhagen Meggle-Freund Gerhard PartG mbB
(86) International application number: PCT/JP2014/078117
(87) International publication number: WO 2015/104884

(57) **Abstract**

[Object] To provide a technique that enables an easy movement of the pointing position to a position desired by the user.

[Solution] There is provided an information processing system including a gaze detection unit configured to detect a gaze of a user, an operation detection unit configured to detect an operation in a space by the user, and a position control unit configured to determine a pointing position based on the operation. The position control unit causes the pointing position to move based on the gaze if a predetermined operation is detected.

## Description

### Technical Field

The present disclosure relates to an information processing system, an information processing method, and a program.

### Background Art

In recent years, various methods for controlling a pointing position by a user have been disclosed. For example, a method of causing the pointing position to be determined based on a motion detected by a sensor has been disclosed. As an example, a method of determining the pointing position based on an angular velocity detected by a gyro sensor has been disclosed (see, for example, Patent Literature 1 below).

### Citation List

### Patent Literature

Patent Literature 1: WO 2009/008372

### Summary of Invention

### Technical Problem

It is desirable, however, that a technique that enables an easy movement of the pointing position to a position desired by the user when controlling the pointing position be provided.

### Solution to Problem

According to the present disclosure, there is provided an information processing system including: a gaze detection unit configured to detect a gaze of a user; an operation detection unit configured to detect an operation in a space by the user; and a position control unit configured to determine a pointing position based on the operation. The position control unit causes the pointing position to move based on the gaze if a predetermined operation is detected.

According to the present disclosure, there is provided an information processing method including: detecting a gaze of a user; detecting an operation in a space by the user; determining a pointing position based on the operation; and moving the pointing position based on the gaze if a predetermined operation is detected by a processor.

According to the present disclosure, there is provided a program for causing a computer to function as an information processing system including: a gaze detection unit configured to detect a gaze of a user; an operation detection unit configured to detect an operation in a space by the user; and a position control unit configured to determine a pointing position based on the operation. The position control unit causes the pointing position to move based on the gaze if a predetermined operation is detected.

### Advantageous Effects of Invention

As described above, according to the present disclosure, the pointing position can be easily moved to a position desired by a user when the pointing position is controlled. Note that the effects described above are not necessarily limited, and along with or instead of the effects, any effect that is desired to be introduced in the present specification or other effects that can be expected from the present specification may be exhibited.

### Brief Description of Drawings

[FIG. 1] FIG. 1 is a diagram for explaining an outline of an information processing system according to an embodiment of the present disclosure.
[FIG. 2] FIG. 2 is a diagram illustrating an example of the functional configuration of the information processing system according to the embodiment.
[FIG. 3] FIG. 3 is a diagram for explaining an example of a condition for detecting an operation by a user as a predetermined operation.
[FIG. 4] FIG. 4 is a diagram for explaining an example of a condition for detecting an operation by the user as a predetermined operation.
[FIG. 5] FIG. 5 is a diagram for explaining examples of conditions for not detecting an operation by the user as the predetermined operation.
[FIG. 6] FIG. 6 is a diagram illustrating an example cursor displayed prior to a position movement when the predetermined operation has been detected.
[FIG. 7] FIG. 7 is a diagram illustrating an example object which is displayed when the predetermined operation has been detected.
[FIG. 8] FIG. 8 is a diagram illustrating an example cursor displayed after a position movement when the predetermined operation has been detected.
[FIG. 9] FIG. 9 is a flowchart illustrating a procedure of an operation of the information processing system according to an embodiment of the present disclosure.
[FIG. 10] FIG. 10 is a diagram illustrating a first example of how a cursor is displayed when a pointing position has reached an edge of a display area.
[FIG. 11] FIG. 11 is a diagram illustrating a first example of how the cursor is displayed when the pointing position is not within the display area.
[FIG. 12] FIG. 12 is a diagram illustrating a second example of how the cursor is displayed when the pointing position has reached the edge of the display area.
[FIG. 13] FIG. 13 is a diagram illustrating a second example of how the cursor is displayed when the pointing position is not within the display area.
[FIG. 14] FIG. 14 is a diagram illustrating a modified example of the functional configuration of the information processing system according to an embodiment of the present disclosure.
[FIG. 15] FIG. 15 is a diagram illustrating an example of the hardware configuration of the information processing system according to the embodiment.

### Description of Embodiments

Hereinafter, (a) preferred embodiment(s) of the present disclosure will be described in detail with reference to the appended drawings. In this specification and the drawings, elements that have substantially the same function and structure are denoted with the same reference signs, and repeated explanation is omitted.

Note that, in this description and the drawings, structural elements that have substantially the same function and structure are sometimes distinguished from each other using different alphabets after the same reference sign. However, when there is no need in particular to distinguish structural elements that have substantially the same function and structure, the same reference sign alone is attached.

Note that description will be provided in the following order.
1. Outline of information processing system
2. Example of functional configuration of information processing system
3. Details of functions of information processing system
4. Modified example of functional configuration of information processing system
5. Example of hardware configuration of information processing system
6. Conclusion

### <1. Outline of information processing system>

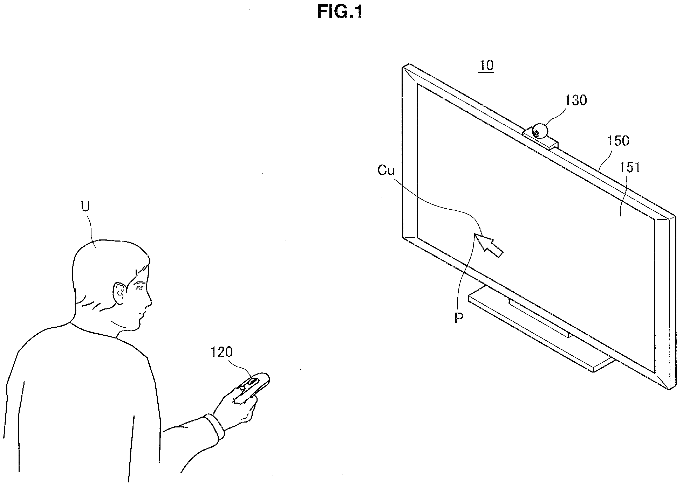

First, an outline of an information processing system 10 according to an embodiment of the present disclosure will be described. FIG. 1 is a diagram for explaining the outline of the information processing system 10 according to the embodiment of the present disclosure. Referring to FIG. 1, the information processing system 10 includes a detection unit 120, an imaging unit 130, and a display unit 150. The display unit 150 includes a display area 151, and displays a screen in the display area 151. Screens displayed in the display area 151 are not limited to particular screens. As illustrated in FIG. 1, a user U may be at a position from which he or she can view the screen displayed in the display area 151.

The detection unit 120 detects predetermined detection data. The detection data detected by the detection unit 120 is used for a determination of a pointing position P by the user U. In the present specification, an example is primarily described in which the detection unit 120 includes a gyro sensor, and x and y coordinates in the display area 151 which correspond to an initial orientation of the detection unit 120 and an angular velocity detected by the gyro sensor are calculated for the pointing position P. Details of such a calculation of the pointing position P are disclosed in Patent Literature 1 (WO 2009/008372). Note, however, that the determination of the pointing position P by the user U may be made in any manner, as described below.

Also, as illustrated in FIG. 1, the display unit 150 may display a cursor Cu at the pointing position P. While the cursor Cu illustrated in the example of FIG. 1 is in the form of a white arrow having a high degree of clearness, the cursor Cu is not limited in color, shape, degree of clearness, or the like. For example, the cursor Cu may alternatively be an ellipse, a circle, or the like in shape, as described below. Also, the cursor Cu may be lower in degree of clearness than another object displayed in the display area 151. Also, the display unit 150 may not display the cursor Cu at the pointing position P.

For example, in the case where an object is being displayed in the display area 151, if a predetermined determination operation is performed by the user U in a state in which the pointing position P overlaps with the object, an operation corresponding to this object may be executed. Objects displayed in the display area 151 are not limited to particular objects, and examples of such objects include still images, moving images, buttons, and character strings.

Also, the predetermined determination operation is not limited to any particular operation, and may be an operation of pressing a button provided on the detection unit 120, or an operation of moving the detection unit 120 in such a manner that the detection unit 120 exhibits a predetermined motion. Also, the operation corresponding to such an object is not limited to any particular operation, and may be a transition to a screen corresponding to the object. The imaging unit 130 has a function of capturing an image containing a portion or the whole of a body of the user U. In the case where a portion of the body of the user U is captured, this portion of the body of the user U may be a face area of the user U or an eye area of the user U.

Here, in the case where the pointing position P is determined based on the detection data detected by the detection unit 120, it is desirable that a technique that enables an easy movement of the pointing position P to a position desired by the user be provided. Accordingly, in the present specification, a technique is proposed that enables an easy movement of the pointing position P to the position desired by the user in the case where the pointing position P is determined based on the detection data detected by the detection unit 120.

In a specific case, the pointing position P can become away from the position desired by the user. Conceivable causes of the pointing position P becoming away from the position desired by the user include, for example, a drift phenomenon, i.e., an unwanted movement of the pointing position P irrelevant to the intention of the user U, and a displacement of an initial position of the pointing position P from the position desired by the user. The technique that enables an easy movement of the pointing position P to the position desired by the user can be effectively applied particularly for such situations.

The outline of the information processing system 10 according to the embodiment of the present disclosure has been described above.

### <2. Example of functional configuration of information processing system>

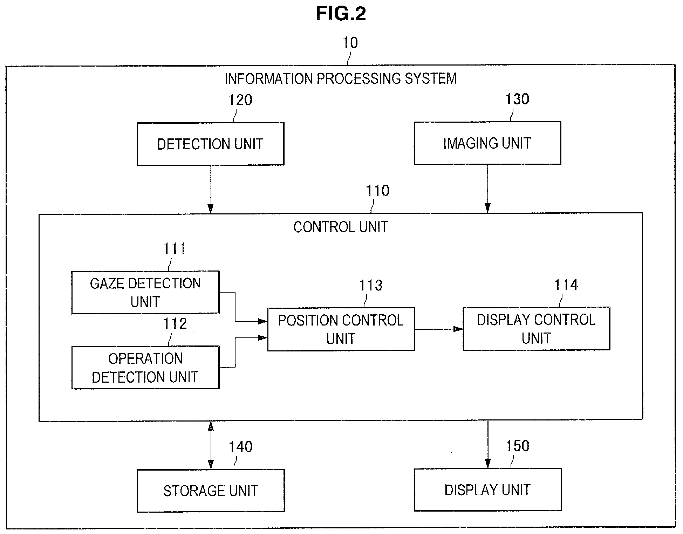

Next, an example of the functional configuration of the information processing system 10 according to the embodiment of the present disclosure will now be described below. FIG. 2 is a diagram illustrating the example of the functional configuration of the information processing system 10 according to the embodiment of the present disclosure. As illustrated in FIG. 2, the information processing system 10 includes a control unit 110, the detection unit 120, the imaging unit 130, a storage unit 140, and the display unit 150.

The control unit 110 implements various functions of the control unit 110 by executing a program stored in the storage unit 140 or another storage medium. As illustrated in FIG. 2, the control unit 110 has functional blocks including a gaze detection unit 111, an operation detection unit 112, a position control unit 113, and a display control unit 114. Details of functions of these functional blocks will be described below.

Note that the control unit 110 may be formed by a processor, such as, for example, a central processing unit (CPU), a graphics processing unit (GPU), a digital signal processor (DSP), or a system on chip (SoC). Also note that the control unit 110 may be formed by an electronic circuit for performing various arithmetic processing.

The detection unit 120 detects the predetermined detection data, and outputs the predetermined detection data to the control unit 110. While the case where the detection unit 120 includes the gyro sensor is primarily described in the present specification, the detection unit 120 may include another sensor. For example, the detection unit 120 may include a three-axis acceleration sensor. Also, as described below, in the case where a motion in a space by the user is detected by the imaging unit 130, the information processing system 10 may not include the detection unit 120. Note that, although the detection unit 120 is an integral portion of the information processing system 10 in the embodiment illustrated in FIG. 2, the detection unit 120 may alternatively be provided separately from the information processing system 10.

The imaging unit 130 is a camera module to capture an image. The imaging unit 130 captures an actual space using an image pickup device, such as, for example, a charge coupled device (CCD) or a complementary metal oxide semiconductor (CMOS), to generate an image thereof. The image generated by the imaging unit 130 is outputted to the control unit 110. Note that, although the imaging unit 130 is an integral portion of the information processing system 10 in the embodiment illustrated in FIG. 2, the imaging unit 130 may alternatively be provided separately from the information processing system 10. For example, an imaging device connected to the information processing system 10 in a wired or wireless manner may be treated as the imaging unit 130.

The storage unit 140 stores a program for an operation of the control unit 110 using a storage medium, such as, for example, a semiconductor memory or a hard disk. In addition, the storage unit 140 may also store various data used by the program, for example. Note that, although the storage unit 140 is an integral portion of the information processing system 10 in the embodiment illustrated in FIG. 2, the storage unit 140 may alternatively be provided separately from the information processing system 10.

The display unit 150 displays various information in accordance with control by the control unit 110. The display unit 150 may be implemented by a liquid crystal display (LCD), an organic electroluminescence (EL) display, a projector, or a hologram display. Note that, although the display unit 150 is an integral portion of the information processing system 10 in the embodiment illustrated in FIG. 2, the display unit 150 may alternatively be provided separately from the information processing system 10. For example, a display device connected to the information processing system 10 in a wired or wireless manner may be treated as the display unit 150.

The example of the functional configuration of the information processing system 10 according to the embodiment of the present disclosure has been described above.

### <3. Details of functions of information processing system>

Next, details of functions of the information processing system 10 according to the embodiment of the present disclosure will now be described below. In the information processing system 10, the gaze detection unit 111 detects a gaze of the user. The gaze detection unit 111 may detect the gaze of the user by any method. For example, in the case where an image captured by the imaging unit 130 contains the eye area, the gaze detection unit 111 may detect the gaze of the user based on the eye area. In more detail, the gaze detection unit 111 may detect the gaze of the user by subjecting the eye area to pattern matching.

The operation detection unit 112 detects an operation in a space by the user based on the detection data. Then, the position control unit 113 determines the pointing position P based on the operation detected by the operation detection unit 112. In the present specification, an example is primarily described in which the position control unit 113 calculates the x and y coordinates in the display area 151 which correspond to the initial orientation of the detection unit 120 and the angular velocity detected by the gyro sensor for the pointing position P. Note, however, that the determination of the pointing position P may be made in any manner, as described below.

In addition, if a predetermined operation is detected by the operation detection unit 112, the position control unit 113 moves the pointing position P based on the gaze of the user. This enables an easy movement of the pointing position P to a position desired by the user. The predetermined operation detected by the operation detection unit 112 is not limited to any particular operation. For example, the operation detection unit 112 may detect the predetermined operation based on the detection data. For example, the operation detection unit 112 may detect a predetermined motion recognized from the detection data as the predetermined operation.

Note that, although a case in which a predetermined change in the x and y coordinates in the display area 151 which correspond to the initial orientation of the detection unit 120 and the angular velocity detected by the gyro sensor is treated as the predetermined motion is primarily described in the present specification, the predetermined motion is not limited to any particular motion. For example, a predetermined change in acceleration detected by an acceleration sensor may be treated as the predetermined motion, or a predetermined change in the angular velocity detected by the gyro sensor may be treated as the predetermined motion. Also, as described below, the operation detection unit 112 may detect a predetermined state recognized from the detection data as the predetermined operation.

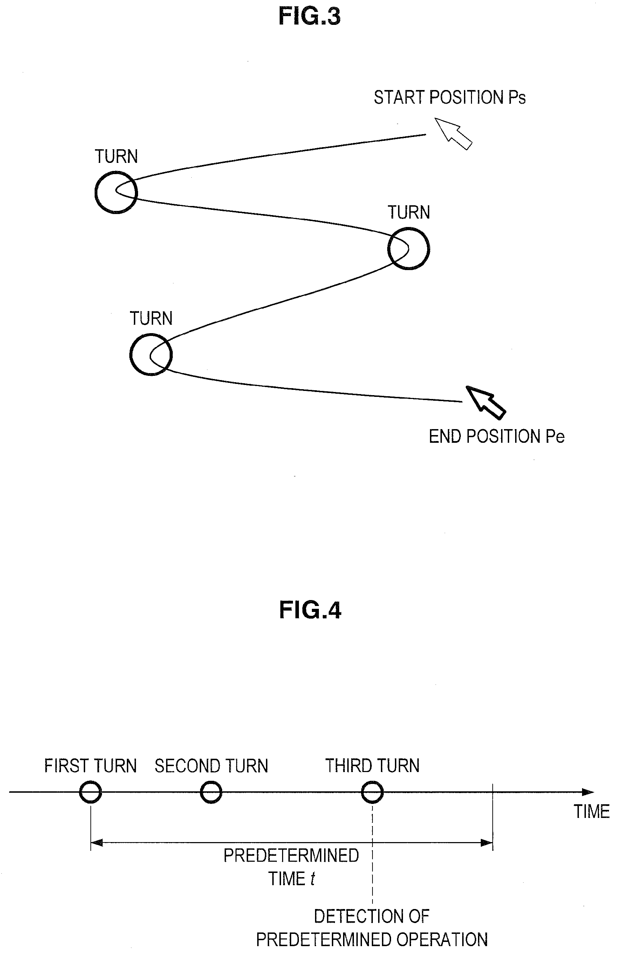

Here, an example of the predetermined operation will be described in more detail below with reference to FIGS. 3 and 4. FIGS. 3 and 4 are diagrams for explaining an example of a condition for detecting an operation by the user as the predetermined operation. In FIG. 3, a locus of the pointing position P is illustrated, and a start position Ps and an end position Pe are shown. For example, the operation detection unit 112 may detect the predetermined operation when a change in movement in a predetermined direction satisfies a predetermined condition. FIG. 3 illustrates an example case where the predetermined operation is detected by the operation detection unit 112 if the number of horizontal turns reaches or exceeds an upper-limit number within a predetermined time.

Note that, although FIG. 3 illustrates an example case where the upper-limit number is three, the upper-limit number is not limited to any particular number. Also note that the predetermined direction is not limited to a horizontal direction, but may be a vertical direction or another direction. Also note that the predetermined time is not limited to any particular time. For example, the operation detection unit 112 may detect the predetermined operation if a third turn is detected within a predetermined time *t* after a first turn as illustrated in FIG. 4. The predetermined time *t* is not limited to any particular time, and may be, for example, 400 ms. In addition, the operation detection unit 112 may reset an elapsed time from the first turn if the third turn is not detected within the predetermined time *t* after the first turn.

While FIG. 3 illustrates the example case where the predetermined operation is detected by the operation detection unit 112 if the number of horizontal turns reaches or exceeds the upper-limit number within the predetermined time, detection of the predetermined operation is not limited to this example. For example, the predetermined operation may be detected by the operation detection unit 112 if a predetermined locus is drawn by a motion recognized from the detection data. The predetermined locus is not limited to any particular locus, and may be a circle, or may be a writing of, for example, a predetermined character or a predetermined sign.

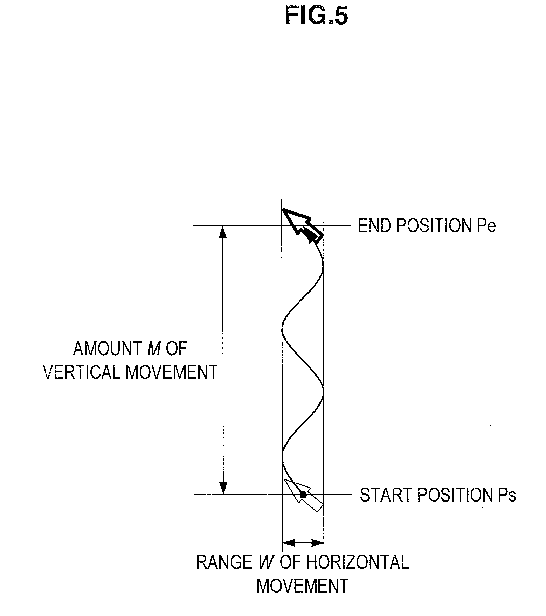

While the predetermined operation can be detected by the operation detection unit 112 as described above, the predetermined operation can be detected by mistake. For example, when the user lifts the detection unit 120 in the vertical direction, the detection unit 120 may shake in the horizontal direction, which may cause the number of horizontal turns to reach or exceed the upper-limit number within the predetermined time. Accordingly, the predetermined operation may not be detected in some cases even if the predetermined motion is detected. Specific examples of such cases will be described in more detail below with reference to FIG. 5.

FIG. 5 is a diagram for explaining examples of conditions for not detecting an operation by the user as the predetermined operation. For example, even if the number of horizontal turns reaches or exceeds the upper-limit number within the predetermined time, the operation detection unit 112 may not detect the predetermined operation if the amount M of vertical movement of the pointing position P (see FIG. 5) within the predetermined time exceeds an upper-limit amount. Further, for example, even if the number of horizontal turns reaches or exceeds the upper-limit number within the predetermined time, the operation detection unit 112 may not detect the predetermined operation if the range W of horizontal movement of the pointing position P (see FIG. 5) within the predetermined time exceeds a lower-limit value.

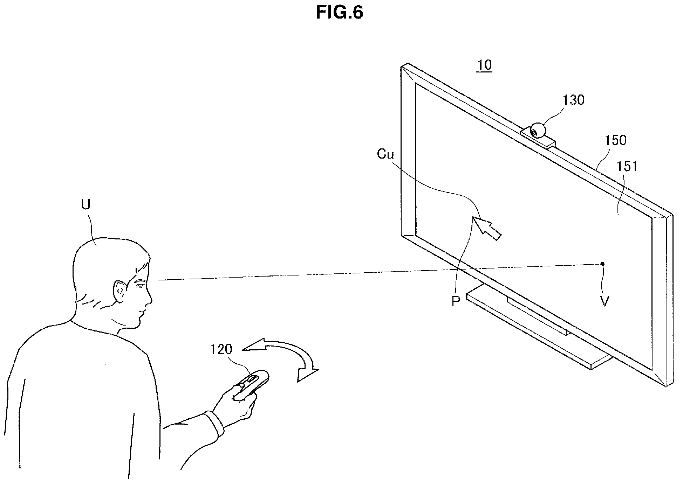

The functions of the information processing system 10 will now be described in more detail below with reference to FIGS. 6, 7, and 8. Suppose a case where the user U desires to move the pointing position P in the example illustrated in FIG. 1. In this case, the user U performs a gesture to cause a detection of the predetermined operation. As a result, the predetermined operation is detected by the operation detection unit 112, and the pointing position P is moved by the position control unit 113 based on the gaze. FIG. 6 is a diagram illustrating an example cursor being displayed prior to a position movement when the predetermined operation has been detected.

Referring to FIG. 6, the display control unit 114 has been displaying the cursor Cu at the pointing position P. Here, suppose a case where the user U desires to move the pointing position P. In this case, the user U shakes the detection unit 120 in the horizontal direction, and moves his or her gaze to a position to which the user U desires to move the pointing position P. Consequently, if the number of horizontal turns reaches or exceeds the upper-limit number within the predetermined time, for example, the predetermined operation is detected by the operation detection unit 112, and the pointing position P is caused to move based on the gaze. The position to which the pointing position P is moved may be, for example, a point of intersection of a line of sight of the user U and the display area 151. Referring to FIG. 6, this point of intersection is shown as a focus V of the gaze.

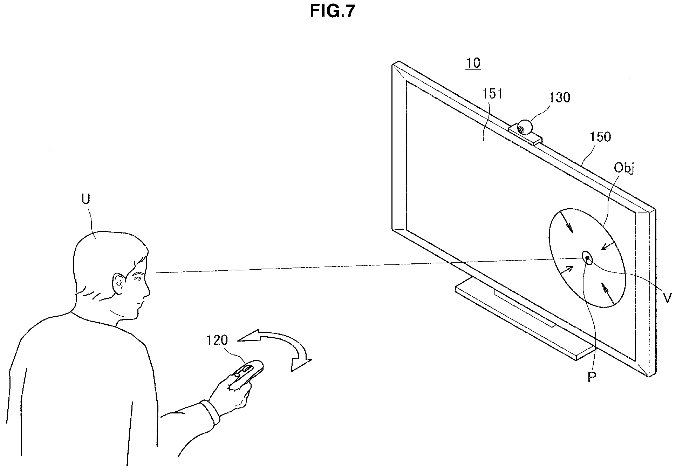

It is desirable that the detection of the predetermined operation be recognized by the user. Accordingly, the display control unit 114 preferably causes a predetermined object to be displayed if the predetermined operation is detected. FIG. 7 is a diagram illustrating an example object which is displayed when the predetermined operation has been detected. The display control unit 114 may cause object Obj to be displayed as illustrated in FIG. 7 when the predetermined operation has been detected. The object Obj may be any object, but is preferably an object based on the pointing position P. FIG. 7 illustrates an example case where the object Obj is a circle with the pointing position P as a center.

Control over the pointing position P may continue after the predetermined operation is detected, but if the pointing position P is allowed to move even while the user U is performing the gesture to cause the detection of the predetermined operation, the pointing position P may move against the intention of the user U. Accordingly, the position control unit 113 preferably fixes the pointing position P at least for a predetermined time after the object Obj is displayed.

FIG. 7 illustrates an example case where a moving image is displayed, more specifically, the object Obj gradually decreases in size, and the object Obj converges into the focus V of the gaze, terminating the display of the object Obj, when the predetermined time has elapsed after a start of the display of the object Obj. As in this example case, the display control unit 114 preferably causes an object that allows the user U to recognize a period during which the pointing position P is fixed to be displayed. This allows the user U to recognize a time point at which a movement of the pointing position P resumes.

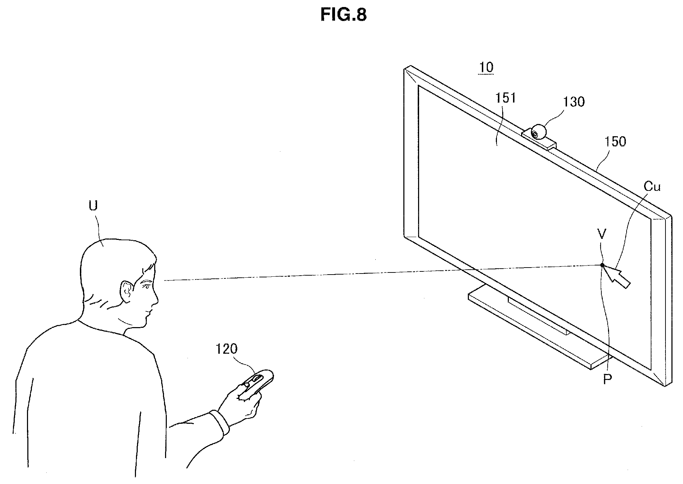

FIG. 8 is a diagram illustrating an example cursor displayed after a position movement when the predetermined operation has been detected. As illustrated in FIG. 8, the display control unit 114 may cause the cursor Cu to be displayed at the pointing position P after being moved based on the gaze of the user U as described above. In addition, in the case where the pointing position P is not fixed, the position control unit 113 is able to control the pointing position P based on the detection data. In this case, the display control unit 114 may cause the cursor Cu to move in accordance with a movement of the pointing position P.

Note that, while the gaze of the user U is not being detected, the pointing position P is not moved in accordance with the gaze even if the predetermined operation is detected, and therefore, feedback is preferably provided to the user U. For example, the display control unit 114 may cause a predetermined indicator to be displayed while the gaze is not being detected. The indicator is not limited to any particular indicator, and may be a display of an object (for example, a message or the like) that indicates that the gaze is not being detected. Also, the display control unit 114 may change the cursor Cu while the gaze is not being detected. The cursor Cu may be changed in any manner, and the cursor Cu may be changed in at least one of color, shape, and degree of clearness.

Also, in the case where the predetermined operation has been detected when the gaze of the user U is not being detected, the pointing position P is not moved in accordance with the gaze, and therefore, feedback is preferably provided to the user U. That is, if the predetermined operation is detected while the gaze is not being detected, the display control unit 114 preferably provides predetermined feedback. The feedback may be provided in any manner, and may be provided in the form of a display of an object (for example, a message or the like) that indicates that the gaze is not being detected.

The cursor Cu may be continuously displayed at all times, or may be hidden when a predetermined condition for hiding the cursor is satisfied. That is, the display control unit 114 may cause the cursor Cu to be hidden if the predetermined condition for hiding the cursor is satisfied. The condition for hiding the cursor is not limited to any particular condition, and the display control unit 114 may cause the cursor Cu to be hidden if the amount of movement detected from the detection data continues to be below a threshold for a predetermined time. This is because such a case can be considered to indicate that the user U does not have an intention to change the pointing position P.

Also, control may differ depending on whether the cursor Cu is being displayed. For example, the display control unit 114 may provide predetermined feedback if the predetermined operation is detected while the gaze is not being detected in a state in which the cursor Cu is being displayed. The feedback may be provided in any manner, and may be provided in the form of a display of an object (for example, a message or the like) that indicates that the gaze is not being detected.

Meanwhile, the position control unit 113 may cause the pointing position P to move based on the gaze if the predetermined operation is detected in a state in which the cursor Cu is hidden. This can produce an advantageous effect of a possible reduction in the likelihood that the user will lose sight of the pointing position P. The greater the display area 151 is, the more marked this effect can be. The position to which the pointing position P is moved may be a point of intersection of the line of sight of the user U and the display area 151.

Also, the position control unit 113 does not cause the pointing position P to move based on the gaze if a predetermined redisplay operation is detected while the gaze is not being detected in the state in which the cursor Cu is hidden. Accordingly, in this case, the position control unit 113 may determine the pointing position P at a position of the cursor Cu when the cursor Cu was hidden. The predetermined redisplay operation is not limited to any particular operation, and may be a transition from a state of no motion to a state of non-zero motion detected based on the detection data.

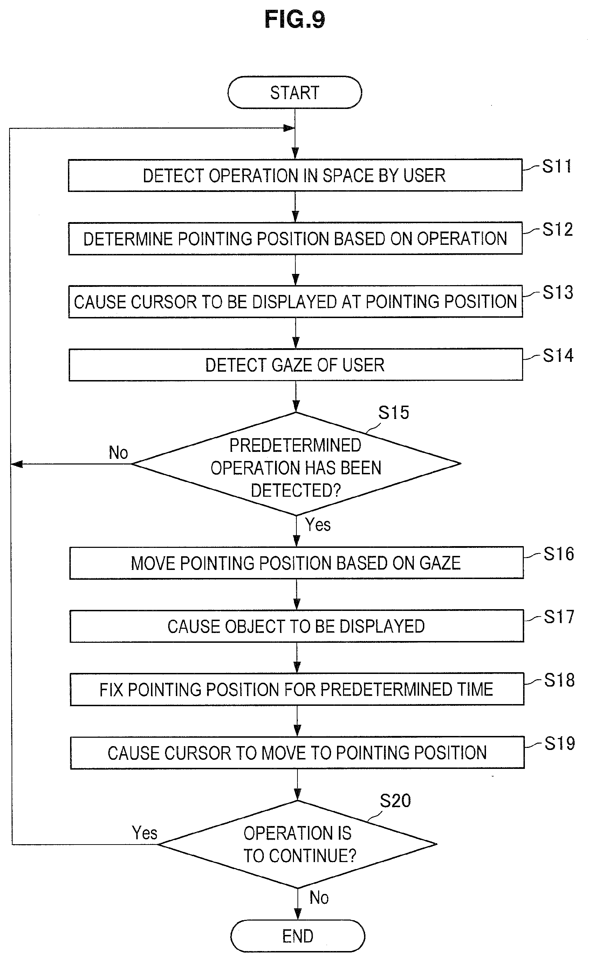

Next, a procedure of an operation of the information processing system 10 according to the embodiment of the present disclosure will now be described below with reference to FIG. 9. FIG. 9 is a flowchart illustrating the procedure of the operation of the information processing system 10 according to the embodiment of the present disclosure. Note that the procedure of the operation illustrated in FIG. 9 is merely an example procedure of the operation of the information processing system 10. Therefore, the procedure of the operation of the information processing system 10 is not limited to the example illustrated in FIG. 9.

The operation detection unit 112 detects the operation in the space by the user based on the detection data (S11). Next, the position control unit 113 determines the pointing position based on the operation detected by the operation detection unit 112 (S12). Next, the display control unit 114 causes the cursor to be displayed at the pointing position (S13). Note that the cursor may not be displayed. Next, the gaze detection unit 111 detects the gaze of the user (S14). Although, in this illustrative example, the gaze is detected by the gaze detection unit 111 after S13, the time point at which the gaze is detected by the gaze detection unit 111 may not necessarily be after S13.

Next, the position control unit 113 determines whether the predetermined operation has been detected by operation detection unit 112 (S15). If the position control unit 113 determines that the predetermined operation has not been detected by the operation detection unit 112 (i.e., if "No" at S15), the control unit 110 causes the operation to proceed to S11. Meanwhile, if the predetermined operation has been detected by the operation detection unit 112 (i.e., if "Yes" at S15), the position control unit 113 causes the pointing position to move based on the gaze (S16). This way of moving the pointing position allows an easy movement of the pointing position to the position desired by the user.

It is desirable that the detection of the predetermined operation be recognized by the user. Accordingly, the display control unit 114 causes the predetermined object to be displayed (S17). In addition, if the pointing position is allowed to move even while the user is performing the gesture to cause the detection of the predetermined operation, the pointing position may move against the intention of the user. Accordingly, the position control unit 113 fixes the pointing position at least for the predetermined time after the object is displayed (S18). In addition, the display control unit 114 causes the cursor to move to the pointing position (S19).

The control unit 110 determines whether the operation is to continue (S20), and if the control unit 110 determines that the operation is to continue (i.e., if "Yes" at S20), the control unit 110 causes the operation to proceed to S11. Meanwhile, if the control unit 110 determines that the operation is to be finished (i.e., if "No" at S20), the control unit 110 terminates the operation. The procedure of the operation of the information processing system 10 according to the embodiment of the present disclosure has been described above with reference to FIG. 9.

It is conceivable that, when the pointing position has been moved based on the operation in the space by the user, the resulting pointing position is not within the display area 151. If such a situation occurs, since the position of the cursor cannot be displayed outside of the display area 151, the display control unit 114 preferably fixes the position of the cursor at an edge of the display area 151 when the pointing position is not within the display area 151.

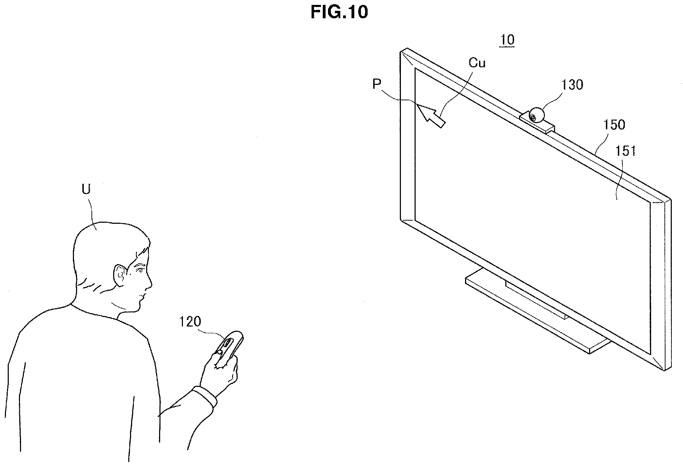

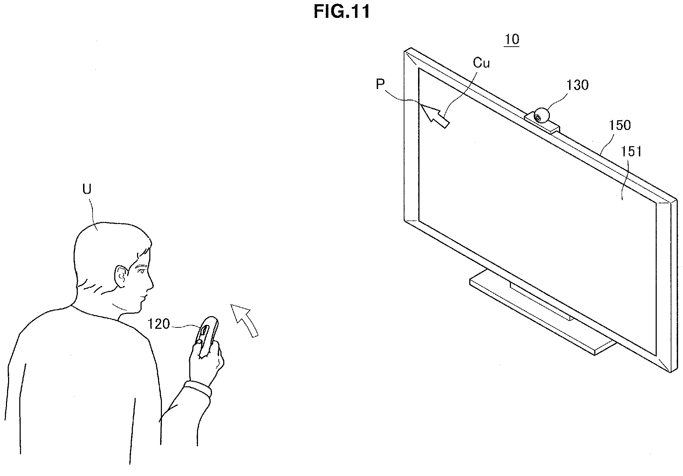

On the other hand, the pointing position may be either inside of the display area 151 or outside of the display area 151. In other words, the position control unit 113 may determine the pointing position at a position inside or outside of the display area 151 based on the operation in the space by the user. As a first example, the position control unit 113 may fix the pointing position at the edge of the display area 151 when the pointing position is not within the display area 151. This first example allows the pointing position to be fixed at the edge of the display area 151 for correction when the pointing position has become displaced from the position desired by the user. This first example will now be described in detail below with reference to FIGS. 10 and 11.

FIG. 10 is a diagram illustrating a first example of how the cursor is displayed when the pointing position P has reached the edge of the display area 151. Referring to FIG. 10, as a result of a determination of the pointing position P by the position control unit 113 based on the operation in the space by the user, the pointing position P has reached the edge of the display area 151. In addition, the display control unit 114 has caused the position of the cursor Cu to be displayed at the pointing position P. Suppose that, in this situation, an operation that causes the pointing position P to be moved out of the display area 151 is performed.

FIG. 11 is a diagram illustrating a first example of how the cursor is displayed when the pointing position P is not within the display area 151. Referring to FIG. 11, since the position of the cursor Cu cannot be displayed outside of the display area 151, the display control unit 114 fixes the position of the cursor Cu at the edge of the display area 151 when the pointing position P is not within the display area 151. In addition, the position control unit 113 fixes the pointing position P at the edge of the display area 151 when the pointing position P is not within the display area 151.

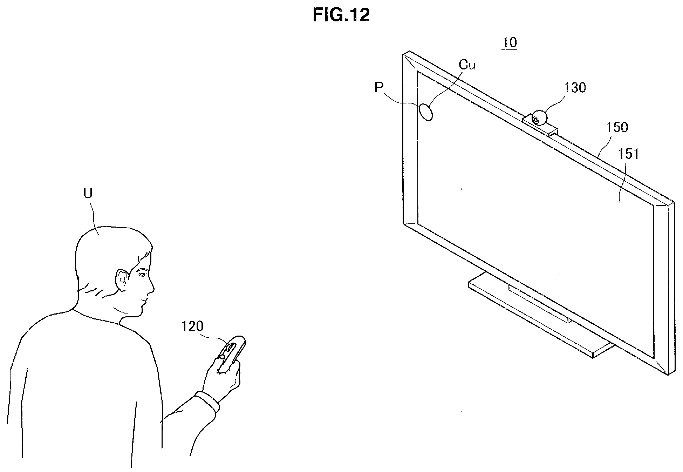

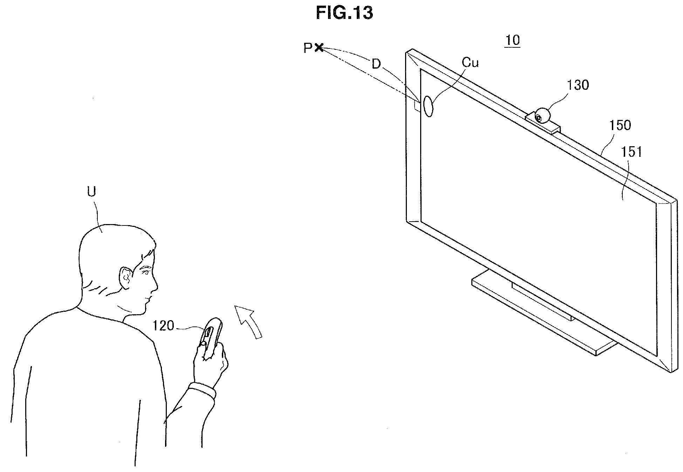

As described above, in the first example, the pointing position is fixed at the edge of the display area 151 when the pointing position is not within the display area 151, but the pointing position may be controlled by another method. As a second example, the position control unit 113 may cause the pointing position to move out of the display area 151 when the pointing position is not within the display area 151. This second example can reduce the likelihood that the pointing position will be displaced from the position desired by the user if a situation in which the pointing position is not within the display area 151 occurs. This second example will now be described in detail below with reference to FIGS. 12 and 13.

FIG. 12 is a diagram illustrating a second example of how the cursor is displayed when the pointing position P has reached the edge of the display area 151. Referring to FIG. 12, as a result of a determination of the pointing position P by the position control unit 113 based on the operation in the space by the user, the pointing position P has reached the edge of the display area 151. In addition, the display control unit 114 has caused the position of the cursor Cu to be displayed at the pointing position P. Suppose that, in this situation, an operation that causes the pointing position P to be moved out of the display area 151 is performed.

FIG. 13 is a diagram illustrating a second example of how the cursor is displayed when the pointing position P is not within the display area 151. Referring to FIG. 13, since the position of the cursor Cu cannot be displayed outside of the display area 151, the display control unit 114 fixes the position of the cursor Cu at the edge of the display area 151 when the pointing position P is not within the display area 151. In addition, referring to FIG. 13, the position control unit 113 determines the pointing position P to be at x and y coordinates in an imaginary plane which is an extension of the display area 151 when the pointing position P is not within the display area 151.

Here, when the pointing position P is outside of the display area 151, the user may not be able to see where the pointing position P is, since the position of the cursor Cu can be displayed only within the display area 151. Accordingly, as illustrated in FIG. 13, the display control unit 114 preferably changes the cursor Cu in accordance with a distance D between the pointing position P and the edge of the display area 151 when the pointing position P is not within the display area 151.

FIG. 13 illustrates an example in which the display control unit 114 increases the degree of a change in shape of the cursor Cu as the distance D increases. Note, however, that the change in the cursor Cu may be a change in color of the cursor Cu. For example, the display control unit 114 may increase the change in color of the cursor Cu as the distance D increases. Also note that the change in the cursor Cu may be a change in the degree of clearness of the cursor Cu. For example, the display control unit 114 may increase the change in the degree of clearness of the cursor Cu as the distance D increases.

The details of the functions of the information processing system 10 according to the embodiment of the present disclosure have been described above.

### <4. Modified example of functional configuration of information processing system>

As described above, the operation detection unit 112 detects the operation in the space by the user based on the detection data. While the example in which the detection data is detected by the detection unit 120 has been described above, the image captured by the imaging unit 130 may be used in place of the detection data detected by the detection unit 120.

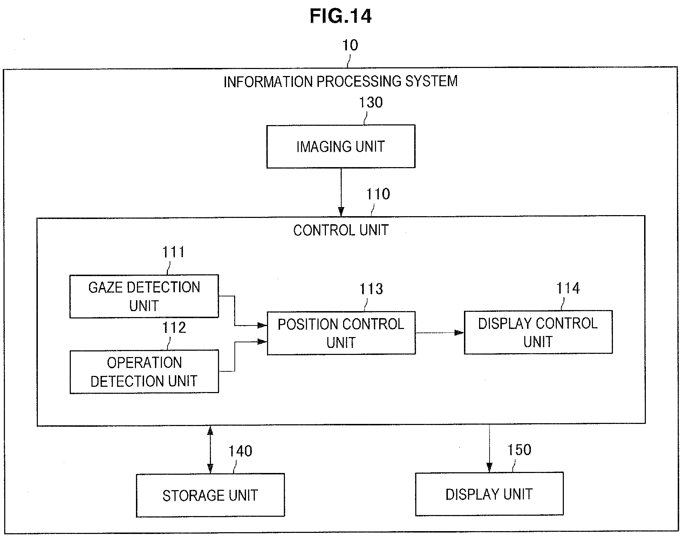

FIG. 14 is a diagram illustrating a modified example of the functional configuration of the information processing system 10 according to the embodiment of the present disclosure. In the case where the image captured by the imaging unit 130 is used in place of the detection data detected by the detection unit 120, the information processing system 10 may not include the detection unit 120 as illustrated in FIG. 14. For example, the operation detection unit 112 may recognize a predetermined recognition target from the image captured by the imaging unit 130, and detect an operation based on a motion or state of the recognition target. The recognition target may be an object moved by the user, or the body of the user himself or herself. The body of the user himself or herself may be a portion of the body of the user himself or herself, or the whole body of the user himself or herself.

For example, in the case where a direction of the object moved by the user has been detected by the operation detection unit 112, the position control unit 113 may determine the pointing position based on the direction of the object. Also, in the case where a motion of the object has been detected by the operation detection unit 112, the position control unit 113 may determine the pointing position based on the motion of the object. Further, the operation detection unit 112 may detect a predetermined operation when the object has exhibited a predetermined motion, or may detect a predetermined operation when the object has come to be in a predetermined state.

For example, in the case where a direction of the body of the user himself or herself has been detected by the operation detection unit 112, the position control unit 113 may determine the pointing position based on the direction of the body of the user himself or herself. This direction of the body of the user himself or herself may be a direction in which a finger of the user points, or a direction leading from an elbow to a fingertip of the user. Also, in the case where a motion of the body of the user himself or herself has been detected by the operation detection unit 112, the position control unit 113 may determine the pointing position based on the motion of the body of the user himself or herself.

Further, the operation detection unit 112 may detect a predetermined operation in the case where the body of the user himself or herself has exhibited a predetermined motion, or may detect a predetermined operation when the body of the user himself or herself has come to be in a predetermined state. The predetermined motion may be a waving motion of a hand by the user, or any other motion. Also, the predetermined state may be a state in which the user has opened his or her hand, a state in which the user has closed his or her hand, or any other state.

### <5. Example of Hardware Configuration of Information Processing System>

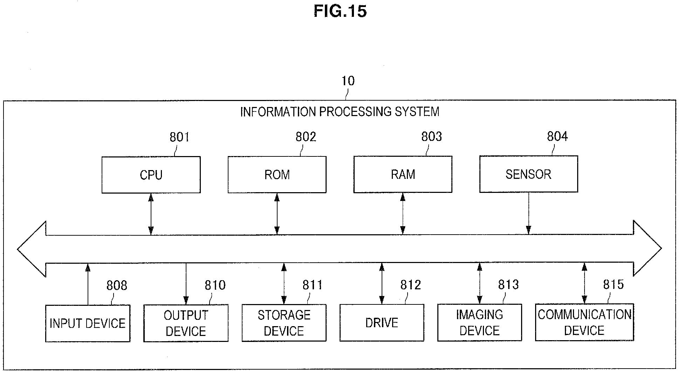

Subsequently, an example of hardware configuration of the information processing system 10 according to the embodiment of the present disclosure will be described. FIG. 15 is a diagram illustrating an example of hardware configuration of the information processing system 10 according to the embodiment of the present disclosure. However, the example of hardware configuration illustrated in FIG. 15 is merely an example hardware configuration of the information processing system 10. Therefore, the hardware configuration of the information processing system 10 is not limited to the example illustrated in FIG. 15.

As illustrated in FIG. 15, the information processing system 10 includes a central processing unit (CPU) 801, a read only memory (ROM) 802, a random access memory (RAM) 803, a sensor 804, an input device 808, an output device 810, a storage device 811, a drive 812, an imaging device 813, and a communication device 815.

The CPU 801 functions as an arithmetic processing unit and a controller, and controls overall operations inside the information processing system 10 according to various programs. Also, the CPU 801 may be a microprocessor. The ROM 802 stores programs or arithmetic parameters data and the like which are used by the CPU 801. The RAM 803 temporarily stores programs which are used in the execution of the CPU 801, or parameters which are appropriately changed upon execution thereof. These are mutually connected through a host bus configured by a CPU bus or the like.

The sensor 804 includes various detection sensors, such as a state detection sensor for detecting a state of the information processing system 10, and peripheral circuits thereof. Examples of the sensor 804 may include a positioning sensor, a tilt sensor, an acceleration sensor, a gyro sensor, a direction sensor, a temperature sensor, a humidity sensor, and an illuminance sensor. A signal detected by the sensor 804 is transmitted to the CPU 801. In this way, the CPU 801 can know the state (position, tilt, acceleration, angular velocity, direction, temperature, humidity, illumination, or the like) of the information processing system 10.

The input device 808 includes an operation unit configured to allow the user to input information, such as a mouse, a keyboard, a touch panel, a button (power button or the like), a microphone, a switch, a dial, and a lever, and an input control circuit configured to generate an input signal based on a user input and output the input signal to the CPU 801. The user of the information processing system 10 can input various data or instruct the processing operations to the information processing system 10 by operating the input device 808. Also, the installation position of the operation unit is not particularly limited. For example, the operation unit may be installed on a housing side surface of the information processing system 10, or may be installed on the same surface as the surface on which a display is installed.

The output device 810 may include a display device such as, for example, a liquid crystal display (LCD), an organic light emitting diode (OLED), and a lamp. Furthermore, the output device 810 may include an audio output device such as a speaker and a headphone. For example, the display device displays a captured image or a generated image. On the other hand, the audio output device converts audio data or the like into audio, and outputs the resultant audio.

The storage device 811 is a device for data storage that is configured as an example of the storage unit of the information processing system 10. The storage device 811 may include a storage medium, a recording device that records data in the storage medium, a reading device that reads data from the storage medium, and an erasing device that erases data recorded on the storage medium. The storage device 811 stores programs or various data which are executed by the CPU 801.

The drive 812 is a reader/writer for storage medium and is internally or externally mounted in the information processing system 10. The drive 812 reads information recorded in a removable storage medium, such as a magnetic disk, an optical disk, a magneto-optical disk, or a semiconductor memory mounted thereon, and outputs the read information to the RAM 803. Also, the drive 812 can write information to the removable storage medium.

The imaging device 813 is a device to generate a captured image by capturing an actual space using various members thereof including, for example, an image pickup device, such as a charge coupled device (CCD) or a complementary metal oxide semiconductor (CMOS), and a lens to control a formation of an image of a subject onto the image pickup device. The imaging device 813 may be a device to capture still images, or a device to capture moving images.

The communication device 815 communicates with an external device via a network (or directly). The communication device 815 may be an interface for wireless communication. For example, the communication device 815 may include a communication antenna, a radio frequency (RF) circuit, a baseband processor, and the like. Specific examples of the interface for wireless communication may include a communication unit such as a modem supporting a communication scheme, such as a code division multiple access (CDMA), a wideband code division multiple access (W-CDMA), a long term evolution (LTE), a wireless fidelity (Wi-Fi, registered trademark).

Also, the communication device 815 may be an interface for wired communication. For example, the communication device 815 may include a connection terminal, a transmission circuit, and a circuit for other communication processing. Also, the CPU 801 and the communication device 815 may be configured by a single chip, or may be implemented as separate devices. Also, although not illustrated in FIG. 15, the information processing system 10, for example, may be driven by power supplied from a power source such as a rechargeable battery, and the power source may be configured to be detachable from the information processing system 10.

In the above, the example of hardware configuration of the information processing system 10 according to the embodiment of the present disclosure was described. For example, the display unit 150 and the storage unit 140 can be realized by the output device 810 and the storage device 811, respectively. Also, the control unit 110 can be realized by the CPU 801. Therefore, a program causing a computer to function as the information processing system 10 including the control unit 110 can be stored in the storage device 811, the ROM 802, or the RAM 803, and the CPU 801 can execute the relevant program.

Also, the configuration for outputting display control information to the display unit 150 corresponds to an example of the "output unit". As a specific example, the output unit can be realized by a device such as a signal line positioned between the CPU 801 and the bus 806 illustrated in FIG. 15. Also, the display control information can be realized by a video signal such as an RGB signal or a high-definition multimedia interface (HDMI) used for controlling the output device 810 (for example, a display, or the like) by the CPU 801.

If the operation of the above-described information processing system 10 is realized, the position of each configuration illustrated in FIG. 5 is not particularly limited. As a specific example, each of the detection unit 120, the display unit 150, the control unit 110, and the storage unit 140 may be provided in different information processing devices connected through the network. In this case, the information processing device in which the control unit 110 and the storage unit 140 are provided, for example, may correspond to a server such as a web server or a cloud server, and the detection unit 120 and the display unit 150 may correspond to a client connected to the server through the network.

As described above, in a case where the function of the information processing system 10 is realized by the client and the server, the configuration (for example, a communication interface such as a modem) in which the server including the control unit 110 transmits the display control information to the client through the network corresponds to an example of the "output unit".

Also, in a case where the function of the information processing system 10 is realized by the client and the server, the contents of the display control information may be appropriately changed according to the system configuration. As a specific example, in a case where the described-above screen is displayed on the browser of the client side, the display control information may be realized by a markup language, such as a hypertext markup language (HTML), a standard generalized markup language (SGML), an extensible markup language (XML), or the like.

Also note that mere examples of the display control information have been mentioned above, and that the display control information may be changed appropriately in accordance with a system for information exchange between the display control unit 114 and the display unit 150, a type of a transmission line, or a medium (for example, a radio signal or light) used for the information exchange.

### <6. Conclusion>

As described above, according to an embodiment of the present disclosure, an information processing system is provided which includes a gaze detection unit configured to detect a gaze of a user, an operation detection unit configured to detect an operation in a space by the user, and a position control unit configured to determine a pointing position based on the operation, in which the position control unit causes the pointing position to move based on the gaze if a predetermined operation is detected. This structure enables an easy movement of the pointing position to a position desired by the user.

The preferred embodiment(s) of the present disclosure has/have been described above with reference to the accompanying drawings, whilst the present disclosure is not limited to the above examples. A person skilled in the art may find various alterations and modifications within the scope of the appended claims, and it should be understood that they will naturally come under the technical scope of the present disclosure.

For example, while an example case where the number of users who perform operations in the space is one has been primarily described above, the number of users who perform operations in the space may be more than one. In this case, the position control unit 113 may determine a pointing position for each of a plurality of users. In addition, if a predetermined operation is detected, the position control unit 113 may cause the pointing position of the user who has performed that operation to move in accordance with a gaze of that user.

In addition, the display control unit 114 may cause a cursor to be displayed at the pointing position of each of the plurality of users. In this case, the cursor may be different for each of the plurality of users. For example, the display control unit 114 may cause the cursors to be displayed in different colors for different users. In this case, the display control unit 114 may adjust the colors of the cursors to colors of the detection units 120 operated by the respective users. The colors of the detection units 120 may be recognized by the display control unit 114 from images, or may be determined in accordance with IDs of the detection units 120 registered in the information processing system 10.

For example, the operation of the information processing system 10 is not necessarily performed in time series in order described in the flowchart. For example, the operation of the information processing system 10 may be performed in a different order from that described in the flowchart, or at least a part of the operation described in the flowchart may be performed in parallel.

Also, hardware embedded in the computer, such as a CPU, a ROM, and a RAM, can be implemented by a program for exhibiting the same functions as the configuration of the above-described information processing system 10. Also, it is possible to provide a non-transitory computer-readable recording medium storing the relevant program.

In addition, the effects described in the present specification are merely illustrative and demonstrative, and not limitative. In other words, the technology according to the present disclosure can exhibit other effects that are evident to those skilled in the art along with or instead of the effects based on the present specification.

Additionally, the present technology may also be configured as below.
(1) An information processing system including:
   a gaze detection unit configured to detect a gaze of a user;
   an operation detection unit configured to detect an operation in a space by the user; and
   a position control unit configured to determine a pointing position based on the operation,
   wherein the position control unit causes the pointing position to move based on the gaze if a predetermined operation is detected.
(2) The information processing system according to (1),
   wherein the information processing system includes a display control unit configured to cause a predetermined object to be displayed if the predetermined operation is detected.
(3) The information processing system according to (2),
   wherein the position control unit fixes the pointing position at least for a predetermined time after the predetermined object is displayed.
(4) The information processing system according to (2) or (3),
   wherein the display control unit provides predetermined feedback if the predetermined operation is detected while the gaze is not being detected.
(5) The information processing system according to any one of (2) to (4),
   wherein the display control unit causes a predetermined indicator to be displayed while the gaze is not being detected.
(6) The information processing system according to any one of (2) to (4),
   wherein the display control unit changes a cursor while the gaze is not being detected.
(7) The information processing system according to any one of (1) to (6),
   wherein the operation detection unit detects the predetermined operation based on detection data.
(8) The information processing system according to (7),
   wherein the operation detection unit detects a predetermined state recognized from the detection data as the predetermined operation.
(9) The information processing system according to (7),
   wherein the operation detection unit detects a predetermined motion recognized from the detection data as the predetermined operation.
(10) The information processing system according to any one of (2) to (9),
   wherein the display control unit causes a cursor to be displayed at the pointing position.
(11) The information processing system according to (10),
   wherein the display control unit provides predetermined feedback if the predetermined operation is detected while the gaze is not being detected in a state in which the cursor is being displayed.
(12) The information processing system according to any one of (2) to (11),
   wherein the display control unit causes the cursor to be hidden if a predetermined condition for hiding the cursor is satisfied.
(13) The information processing system according to (12),
   wherein the position control unit causes the pointing position to move based on the gaze if the predetermined operation is detected in a state in which the cursor is hidden.
(14) The information processing system according to (12),
   wherein, if a predetermined redisplay operation is detected while the gaze is not being detected in a state in which the cursor is hidden, the position control unit determines the pointing position at a position of the cursor when the cursor was hidden.
(15) The information processing system according to any one of (2) to (14),
   wherein the position control unit determines the pointing position at a position inside or outside of a display area based on the operation.
(16) The information processing system according to (15),
   wherein the display control unit fixes a position of a cursor at an edge of the display area when the pointing position is not within the display area.
(17) The information processing system according to (16),
   wherein the display control unit changes the cursor in accordance with a distance between the pointing position and the edge of the display area when the pointing position is not within the display area.
(18) The information processing system according to any one of (1) to (14),
   wherein the position control unit fixes the pointing position at an edge of a display area when the pointing position is not within the display area.
(19) An information processing method including:
   detecting a gaze of a user;
   detecting an operation in a space by the user;
   determining a pointing position based on the operation; and
   moving the pointing position based on the gaze if a predetermined operation is detected by a processor.
(20) A program for causing a computer to function as an information processing system including:
   a gaze detection unit configured to detect a gaze of a user;
   an operation detection unit configured to detect an operation in a space by the user; and
   a position control unit configured to determine a pointing position based on the operation,
   wherein the position control unit causes the pointing position to move based on the gaze if a predetermined operation is detected.

### Reference Signs List

- 10: information processing system
- 110: control unit
- 111: gaze detection unit
- 112: operation detection unit
- 113: position control unit
- 114: display control unit
- 120: detection unit
- 130: imaging unit
- 140: storage unit
- 150: display unit
- 151: display area
- Cu: cursor
- D: distance
- Obj: object
- P: pointing position
- U: user

## Claims

1. An information processing system comprising:
a gaze detection unit configured to detect a gaze of a user;
an operation detection unit configured to detect an operation in a space by the user; and
a position control unit configured to determine a pointing position based on the operation,
wherein the position control unit causes the pointing position to move based on the gaze if a predetermined operation is detected.

2. The information processing system according to claim 1,
wherein the information processing system includes a display control unit configured to cause a predetermined object to be displayed if the predetermined operation is detected.

3. The information processing system according to claim 2,
wherein the position control unit fixes the pointing position at least for a predetermined time after the predetermined object is displayed.

4. The information processing system according to claim 2,
wherein the display control unit provides predetermined feedback if the predetermined operation is detected while the gaze is not being detected.

5. The information processing system according to claim 2,
wherein the display control unit causes a predetermined indicator to be displayed while the gaze is not being detected.

6. The information processing system according to claim 2,
wherein the display control unit changes a cursor while the gaze is not being detected.

7. The information processing system according to claim 1,
wherein the operation detection unit detects the predetermined operation based on detection data.

8. The information processing system according to claim 7,
wherein the operation detection unit detects a predetermined state recognized from the detection data as the predetermined operation.

9. The information processing system according to claim 7,
wherein the operation detection unit detects a predetermined motion recognized from the detection data as the predetermined operation.

10. The information processing system according to claim 2,
wherein the display control unit causes a cursor to be displayed at the pointing position.

11. The information processing system according to claim 10,
wherein the display control unit provides predetermined feedback if the predetermined operation is detected while the gaze is not being detected in a state in which the cursor is being displayed.

12. The information processing system according to claim 2,
wherein the display control unit causes the cursor to be hidden if a predetermined condition for hiding the cursor is satisfied.

13. The information processing system according to claim 12,
wherein the position control unit causes the pointing position to move based on the gaze if the predetermined operation is detected in a state in which the cursor is hidden.

14. The information processing system according to claim 12,
wherein, if a predetermined redisplay operation is detected while the gaze is not being detected in a state in which the cursor is hidden, the position control unit determines the pointing position at a position of the cursor when the cursor was hidden.

15. The information processing system according to claim 2,
wherein the position control unit determines the pointing position at a position inside or outside of a display area based on the operation.

16. The information processing system according to claim 15,
wherein the display control unit fixes a position of a cursor at an edge of the display area when the pointing position is not within the display area.

17. The information processing system according to claim 16,
wherein the display control unit changes the cursor in accordance with a distance between the pointing position and the edge of the display area when the pointing position is not within the display area.

18. The information processing system according to claim 1,
wherein the position control unit fixes the pointing position at an edge of a display area when the pointing position is not within the display area.

19. An information processing method comprising:
detecting a gaze of a user;
detecting an operation in a space by the user;
determining a pointing position based on the operation; and
moving the pointing position based on the gaze if a predetermined operation is detected by a processor.

20. A program for causing a computer to function as an information processing system including:
a gaze detection unit configured to detect a gaze of a user;
an operation detection unit configured to detect an operation in a space by the user; and
a position control unit configured to determine a pointing position based on the operation,
wherein the position control unit causes the pointing position to move based on the gaze if a predetermined operation is detected.
